**Europäisches Patentamt**

**European Patent Office**

**Office européen des brevets**

(19)

(11) Publication number : **0 481 828 A1**

# (12) EUROPEAN PATENT APPLICATION

(21) Application number : **91309708.5**

(22) Date of filing : **21.10.91**

(51) Int. Cl.⁵ : **B65G 47/91**

(30) Priority : **19.10.90 GB 9022714**

(43) Date of publication of application :
**22.04.92 Bulletin 92/17**

(84) Designated Contracting States :
**DE DK FR GB IT**

(71) Applicant : **KLIKLOK CORPORATION**
**5224 Snapfinger, Woods Drive**
**Decatur, Georgia 30035 (US)**

(72) Inventor : **Harston, John Christopher**
**47 The Leys**
**Clevedon, Avon BS21 7YQ (GB)**
Inventor : **Thomas, Stephen Andrew**
**15 Harrington Road**
**Stockwood, Bristol BS14 8LB (GB)**

(74) Representative : **Long, Edward Anthony et al**
**Hulse & Co. Cavendish Buildings West Street**
**Sheffield S1 1ZZ (GB)**

(54) **Composite reciprocatory movements.**

(57)  A translatory mechanism (1) for applying composite reciprocatory movements to an operational head (2) comprises a fixed support (3), a first pivot (4) carried by the fixed support (3), a first arm (5) pivoted at one end (6) on the first pivot (4), a second pivot (7) carried by the other end (8) of the first arm (5), a second arm (9) pivoted at one end (10) on the second pivot (7), a third pivot (11) carried by the other end (12) of the second arm (9), the operational head (2) being pivoted on the third pivot (11), a bell-crank lever (13) freely pivoted on the second pivot (7), a first control link (14) pivotally connected at one end (15) to one arm (16) of the bell-crank lever (13) and at the other end (17) to the fixed support (3) adjacent the first pivot (4), a second control link (18) pivotally connected at one end (19) to the other arm (20) of the bell-crank lever (13) and at the other end (21) to the operational head (2) adjacent the third pivot (11), a fourth pivot (22) on the first arm (5) intermediate the first and second pivots (4, 7), first drive means (23) carried by the fixed support (3), a first drive link (24) between the first drive means (23) and the fourth pivot (22), a fifth pivot (25) on the second arm (9) intermediate the second and third pivots (7, 11), second drive means (26) carried by the fixed support (3), a second drive link (27) between the second drive means (26) and the fifth pivot (25), and control means (28) for operating the first and second drive means (23, 26) in conjunction.

EP 0 481 828 A1

This invention relates to composite reciprocatory movements, i.e., movements in at least one plane having two components generally perpendicular to each other, e.g., vertical and horizontal components or both horizontal components, and more particularly to translatory mechanisms for applying such movements to an operational head, e.g., a pick-and-place mechanism for packaging machinery having a suction or other pick-up head movable in a vertical plane between a product feed conveyor run and a receiving carton conveyor run moving in horizontal planes perpendicular to each other. Similar mechanisms may be for moving and/or directing air jets, applicators for paints and adhesives or other fluids or pastes, gripping jaws, scoops, pushers or piercers; and may include additional movements of the operational head, such as linear with respect to a single axis or multiple axes, partial rotation which is reversible, or full rotation which is continuous, intermittent or indexing, uni-directional or reversing; and all devices and translatory mechanisms may be used singly or in combination one with another or others.

It is known for such a translatory mechanism to comprise an operational head carried by a trolley movable along a first linear guide by first drive means, such as a double-acting hydraulic or pneumatic cylinder, or reversible motor-driven screw, chain, gear and/or belt means, with the first linear guide itself movable along a second linear guide perpendicular thereto by second drive means, usually similar to the first drive means. In order to ensure precision of movement of the oprational head, such a mechanism requires a robust construction throughout, which because of its high inertia results in a vicious circle and is particularly detrimental to operation at high cycling speeds, e.g., in excess of 60 cycles per minute.

A robot mechanism has been considered for a pick-and-place mechanism for packaging machinery, consisting of an "upper" arm having a first pivot at its upper end carried by a fixed support, a "lower" arm having a second pivot at one end carried by the lower end of the "upper" arm, a pick-up head carried by the other end of the "lower" arm, and motor drives for the first and second pivots operable in conjunction to impart the composite reciprocatory movements to the pick-up head. Because of the weight of the pick-up head (and product transferred thereby) and the leverage involved, sizeable motor drives would be required - particularly for the first pivotwith resultant appreciable inertia, which would be added to by any gearboxes needed to achieve the desired cycling speeds.

The object of the invention is to provide a translatory mechanism for applying composite reciprocatory movements to an operational head without the disadvantages referred to above.

According to the present invention, a translatory mechanism for applying composite reciprocatory movements to an operational head comprises a fixed support, a first pivot carried by the fixed support, a first arm pivoted at one end on the first pivot, a second pivot carried by the other end of the first arm, a second arm pivoted at one end on the second pivot, a third pivot carried by the other end of the second arm, the operational head being pivoted on the third pivot, a bell-crank lever freely pivoted on the second pivot, a first control link pivotally connected at one end to one arm of the bell-crank lever and at the other end to the fixed support adjacent the first pivot, a second control link pivotally connected at one end to the other arm of the bell-crank lever and at the other end to the operational head adjacent the third pivot, a fourth pivot on the first arm intermediate the first and second pivots, first drive means carried by the fixed support, a first drive link between the first drive means and the fourth pivot, a fifth pivot on the second arm intermediate the second and third pivots, second drive means carried by the fixed support, a second drive link between the second drive means and the fifth pivot, and control means for operating the first and second drive means in conjunction.

It will be appreciated that one advantageous result is that the second drive means being carried (as well as the first drive means) by the fixed support relieves the mechanism of a lot of inertia. Secondly, the mechanical advantages afforded by the drive links between the drive means and the intermediate (fourth and fifth) pivots permit of high cycling speeds with relatively light duty drive means, with further reduction in the total inertia of the mechanism. Thirdly, the mechanical advantages can be readily adjusted by altering the positions of the fourth and fifth pivots along the first and second arms respectively. And fourthly, the bell-crank lever and control links enable precise positioning of the operational head at each end of its movement to be ensured.

The first and second control links may have respective lengths equal to the distances between the first and second pivots and between the second and third pivots respectively, whereby both the first arm and first control link and the second arm and second control link form parallel linkages, thereby maintaining a fixed orientation of the operational head throughout its movement. Alternatively, the respective length of either (or each) control link may be different from the distance between the corresponding pivots of the respective arm, thereby enabling the orientation of the operational head to change during its movement. Again, the respective lengths and distances may be the same but the distances between the pivotal connections of either (or each) control link and the respective pivots for the arms may be different in order to effect a change in the orientation of the operational head during its movement.

Each drive means may be a double-acting hydraulic or pneumatic cylinder, or reversible motor-driven screw, chain, gear and/or belt means. Preferably, however, each drive means comprises a reversible servo motor-driven screw carrying a nut pivotally connected to the respective drive link.

The control means for operating the first and second drive means in conjunction may be is a computer programmable to adjust the speed and/or timing and/or stroke of the drive links and thereby determine the speed and/or extent of movement of and/or path taken by the operational head.

Alternatively or in addition, one or more modifier mechanisms may be applied to either or both linkages to modify the movement of the operational head, e.g. an eccentric or bell-crank lever on a modifier pivot on the second arm carrying the fifth pivot and driven (i.e., oscillated or rocked) by a drive link between the first arm and an eccentric drive arm or one arm of the bell-crank lever the other arm of which carries the fifth pivot.

In a preferred embodiment of a pick-and-place mechanism for a packaging machine, all the pivots have horizontal axes, the first arm depends from the fixed suport, and the second arm extends generally horizontally to an operational head having a pair of suction pick-up heads, the control links forming parallel linkages with the respective arms so as to maintain the same orientation of the pick-up heads throughout their movement. The control means for operating the first and second drive means in conjunction, e.g. a programmable computer, may be set to effect successions of cycles of the pick-up heads in which the level at which the pick-up heads release the product being picked-and-placed increases, whereby the product can be stacked in cartons. The first arm has duplicate bars between the first and second pivots, while a broad single second arm extends from the second pivot between the bars of the first arm to the third pivot between lugs on the operational head, which has further lugs below for pivotal connection of duplicate rods of the second control link extending to duplicate bell-crank levers between the bars of the first arm and respective sides of the broad single second arm, the first control link likewise having duplicate rods, while the first drive link has duplicate rods extending from the first drive means to the fourth pivot between the bars of the first arm, and the second drive link has duplicate rods extending from the second drive means and passing either side of the first drive means to the fifth pivot at either side of the broad single second arm. The suction pick-up heads are rotatable about vertical axes with respect to the operational head, which carries means for effecting rotation of the pick-up heads, to make it possible for the product to be turned through 90° during the pick-and-place movement.

The invention will now be described in greater detail, by way of example, with reference to the accompanying drawings.

A translatory mechanism 1 for applying composite reciprocatory movements to an operational head 2 comprises a fixed support 3, a first pivot 4 carried by the fixed support 3, a first arm 5 pivoted at one end 6 on the first pivot 4, a second pivot 7 carried by the other end 8 of the first arm 5, a second arm 9 pivoted at one end 10 on the second pivot 7, a third pivot 11 carried by the other end 12 of the second arm 9, the operational head 2 being pivoted on the third pivot 11, and a bell-crank lever 13 freely pivoted on the second pivot 7. A first control link 14 is pivotally connected at one end 15 to one arm 16 of the bell-crank lever 13 and at the other end 17 to the fixed support 3 adjacent the first pivot 4. A second control link 18 is pivotally connected at one end 19 to the other arm 20 of the bell-crank lever 13 and at the other end 21 to the operational head 2 adjacent the third pivot 11. A fourth pivot 22 is provided on the first arm 5 intermediate the first and second pivots 4 and 7. A first drive means 23 is also carried by the fixed support 3, with a first drive link 24 between the first drive means 23 and the fourth pivot 22. A fifth pivot 25 is provided on the second arm 9 intermediate the second and third pivots 7 and 11. A second drive means 26 is also carried by the fixed support 3, while a second drive link 27 extends between the second drive means 26 and the fifth pivot 25, while control means 28 is provided for operating the first and second drive means 23 and 26 in conjunction.

The first and second control links 14 and 18 have respective lengths equal to the distances between the first and second pivots 4 and 7 and between the second and third pivots 7 and 11 respectively, whereby both the first arm 5 and first control link 14 and the second arm 9 and second control link 18 form parallel linkages, thereby maintaining a fixed orientation of the operational head 2 throughout its movement.

Each drive means 23, 26 comprises a reversible servo motor-driven screw 29 carrying a nut 30 pivotally connected to the respective drive link 24 and 27.

The control means 28 for operating the first and second drive means 23 and 26 in conjunction is a computer programmable to adjust the speed and/or timing and/or stroke of the drive links 5 and 9 and thereby determine the speed and/or extent of movement of and/or path taken by the operational head 2.

The embodiment illustrated is a pick-and-place mechanism 1 for a packaging machine in which case all the pivots 4, 7, 11, 22 and 25 have horizontal axes, the first arm 5 depends from the fixed support 3, and the second arm 9 extends generally horizontally to the operational head 2 having a pair of suction pick-up heads 31. The control links 14, 18 form parallel linkages with the respective arms 5 and 9 so as to maintain the same orientation of the pick-up heads 31 throughout their movement. The control means 28 for operating the first and second drive means in conjunction, e.g., a programmable computer, may be set by standard control engineering techniques to effect successions of cycles of the pick-up heads 31 in which the level at which the pick-up heads 31 release the product 32 being picked-and-placed increases, whereby the product 32 can be stacked in carlons 33. The first arm 5 has duplicate bars between the first and second pivots 4 and 7, while a broad single second arm 9 extends from the second pivot 7 between the duplicate bars of the first arm 5 to the third pivot 11 between lugs on the operational head 2, which has further lugs below for pivotal connection of duplicate rods of the second control link 18 extending to duplicate bell-crank levers 13 between the bars of the first arm 5 and respective sides of the broad single second arm 9, the first control link 14 likewise having duplicate rods, while the first drive link 24 has duplicate rods extending from the nut 30 of the first drive means 23 to the fourth pivot 22 between the bars of the first arm 5, and the second drive link 27 has duplicate rods extending from the-nut 30 of the second drive means 26 and passing either side of the screw 29 of the first drive means 23 to the fifth pivot 25 at either side of the broad single second arm 9. The suction pick-up heads 31 are rotatable about vertical axes with respect to the operational head 2, which carries means for effecting rotation of the pick-up heads 31, to make it possible for the product to be turned through 90° during the pick-and-place movement.

Different operational positions of the first and second arms 5 and 9, the operational head 2, the suction pick up heads 31, are indicated in chain-dotted line.

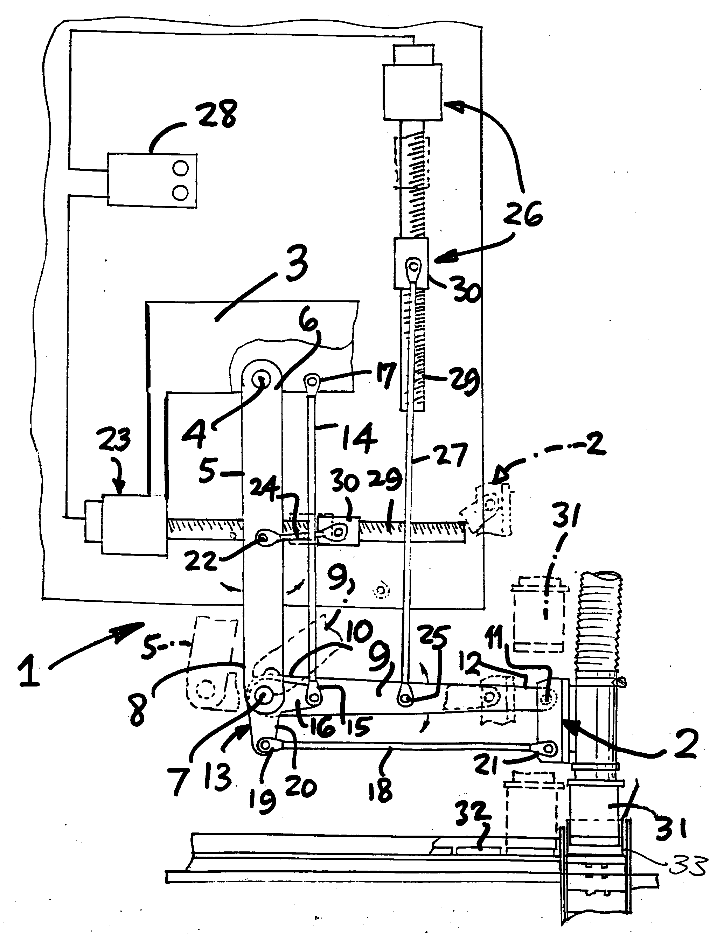

**Claims**

1. A translatory mechanism (1) for applying composite reciprocatory movements to an operational head (2) comprises a fixed support (3), a first pivot (4) carried by the fixed support (3), a first arm (5) pivoted at one end (6) on the first pivot (4), a second pivot (7) carried by the other end (8) of the first arm (5), a second arm (9) pivoted at one end (10) on the second pivot (7), a third pivot (11) carried by the other end (12) of the second arm (9), the operational head (2) being pivoted on the third pivot (11), a bell-crank lever (13) freely pivoted on the second pivot (7), a first control link (14) pivotally connected at one end (15) to one arm (16) of the bell-crank lever (13) and at the other end (17) to the fixed support (3) adjacent the first pivot (4), a second control link (18) pivotally connected at one end (19) to the other arm (20) of the bell-crank lever (13) and at the other end (21) to the operational head (2) adjacent the third pivot (11), a fourth pivot (22) on the first arm (5) intermediate the first and second pivots (4, 7), first drive means (23) carried by the fixed support (3), a first drive link (24) between the first drive means (23) and the fourth pivot (22), a fifth pivot (25) on the second arm (9) intermediate the second and third pivots (7, 11), second drive means (26) carried by the fixed support (3), a second drive link (27) between the second drive means (26) and the fifth pivot (25), and control means (28) for operating the first and second drive means (23,26) in conjunction.

2. A mechanism as claimed in Claim 1, wherein the first and second control links (14, 18) have respective lengths equal to the distances between the first and second pivots (4, 7) and between the second and third pivots (7, 11) respectively, whereby both the first arm (5) and first control link (14) and the second arm (9) and second control link (18) form parallel linkages.

3. A mechanism as claimed in Claim 1, wherein the respective length of either (or each) control link (14, 18) are different from the distance between the corresponding pivots of the respective arm, thereby enabling the orientation of the operational head (2) to change during its movement.

4. A mechanism as claimed in Claim 1, wherein the respective lengths of the first and second control links (14, 18) and distances between the first and second pivots (4, 7) and between the second and third pivots (7, 11) may be the same but the distances between the pivotal connections of either (or each) control link (14, 18) and the respective pivots for the arms may be different in order to effect a change in the orientation of the operational head (2) during its movement.

5. A mechanism as claimed in any preceding Claim, wherein each drive means (23, 26) is a double-acting hydraulic or pneumatic cylinder, or reversible motor-driven screw, chain, gear and/or belt means.

6. A mechanism as claimed in Claim 5, in the reversible motor driven screw (29) embodiment, wherein each drive means comprises a reversible servo motor-driven screw carrying a nut (30) pivotally connected to the respective drive link (24, 27).

7. A mechanism as claimed in any preceding Claim, wherein the control means (28) for operating the first and second drive means (23, 26) in conjunction is a computer programmable to adjust the speed and/or timing and/or stroke of the drive links (5, 9) and thereby determine the speed and/or extent of movement of and/or path taken by the operational head (2).

8. A mechanism as claimed in any preceding Claim, wherein one or more modifier mechanisms are applied to either or both linkages to modify the movement of the operational head, e.g. an eccentric or bell-crank lever on a modifier pivot on the second arm carrying the fifth pivot and driven (i.e., oscillated or rocked) by a drive link between the first arm and an eccentric drive arm or one arm of the bell-crank lever the other arm of which carries the fifth pivot.

9. A mechanism as claimed in any preceding Claim, wherein in an embodiment of a pick-and-place mechanism (1) for a packaging machine, all the pivots (4, 7, 11, 22, 25) have horizontal axes, the first arm (5) depends from the fixed support (3), and the second arm (9) extends generally horizontally to an operational head (2) having a pair of suction pick-up heads (31), the control links (14, 18) forming parallel linkages with the respective arms (5, 9) so as to maintain the same orientation of the pick-up heads (31) throughout their movement.

10. A mechanism as claimed in Claim 9, wherein the control means (28) for operating the first and second drive means in conjunction, e.g. a programmable computer, is set to effect successions of cycles of the pick-up heads in which the level at which the pick-up heads (31) release the product being picked-and-placed increases, whereby the product (32) can be stacked in cartons (33).

11. A mechanism as claimed in Claim 9 or Claim 10, wherein the first arm (5) has duplicate bars between the first and second pivots (4, 7), while a broad single second arm (9) extends from the second pivot (7) between the bars of the first arm (5) to the third pivot (11) between lugs on the operational head (2), which has further lugs below for pivotal connection of duplicate rods of the second control link (19) extending to duplicate bell-crank levers (13) between the bars of the first arm (5) and respective sides of the broad single second arm (9), the first control link (14) likewise having duplicate rods, while the first drive link (24) has duplicate rods extending from the first drive means (23) to the fourth pivot (22) between the bars of the first arm (5), and the second drive link (27) has duplicate rods extending from the second drive means (26) and passing either side of the first drive means (23) to the fifth pivot (25) at either side of the broad single second arm (9).

12. A mechanism as claimed in any one of Claims 9 to 11, wherein the suction pick-up heads (31) are rotatable about vertical axes with respect to the operational head (2), which carries means for effecting rotation of the pick-up heads (31), to make it possible for the product to be turned through 90° during the pick-and-place movement.

**European Patent Office**

# EUROPEAN SEARCH REPORT

Application Number

EP    91 30 9708

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 557 003 (DOMANGE L.) | 1,2 | B65G47/91 |
| A | * claims 1,2,5,7; figures * | 4,5,7-9 | |
| | --- | | |
| Y | FR-A-2 488 543 (DAINICHI KIKO KK.) | 1,2 | |
| A | * page 5, line 6 - page 8, line 30; figures * | 4,5,9,10 | |
| | --- | | |
| A | FR-A-2 238 663 (OHIJI SEIKI KOGYO KABUSHIKI KAISHA) | 1,2,4,5, 9 | |
| | * page 4, line 18 - page 7, line 25; figures * | | |
| | --- | | |
| A | FR-A-2 626 741 (GRANDI RENE) | 6 | |
| | * page 5, line 35 - page 6, line 13; figure 2 * | | |
| | ----- | | |

TECHNICAL FIELDS
SEARCHED (Int. Cl.5)

B65G
B66C

The present search report has been drawn up for all claims

| Place of search | Date of completion of the search | Examiner |
|---|---|---|
| THE HAGUE | 21 JANUARY 1992 | VAN ROLLEGHEM F. |